# EUROPÄISCHE PATENTSCHRIFT

(11) **EP 3 123 852 B1**
(45) Veröffentlichungstag und Bekanntmachung des Hinweises auf die Patenterteilung: **25.04.2018**
(21) Anmeldenummer: 16401043.1
(22) Anmeldetag: 15.07.2016
(51) Int. Cl.: A01C 7/08

(54) **VERTEILER FÜR EINE PNEUMATISCHE VERTEILMASCHINE**
DISTRIBUTION HEAD FOR A PNEUMATIC DISTRIBUTION MACHINE
TÊTE DE DISTRIBUTION POUR UNE MACHINE DE DISTRIBUTION PNEUMATIQUE

(30) Priorität: 28.07.2015 DE 102015112249
(43) Veröffentlichungstag der Anmeldung: 01.02.2017
(73) Patentinhaber: Amazonen-Werke H. Dreyer GmbH & Co. KG, 49205 Hasbergen (DE)
(72) Erfinder: Flucke, Jan, 27798 Hude (DE)

(56) Entgegenhaltungen:
- EP-A1- 2 829 167
- DE-A1-102009 026 332
- US-A1- 2012 103 238

## Beschreibung

Die Erfindung betrifft einen Verteiler für eine pneumatische Verteilmaschine gemäß des Oberbegriffes des Patentanspruches 1.

Ein derartiger Verteiler ist beispielsweise durch die DE 10 2009 026 332 A1 bekannt. Bei diesem Verteiler ist ein Absperrschieber vorgesehen, mit dem gleichzeitig mehrere Eintrittsöffnungen von Verteilerleitungen abgesperrt werden können, so dass in einfacher Weise die Arbeitsbreite reduziert wird. Der Absperrschieber ist in den ringförmigen Verteilerraum durch eine schlitzförmige Aussparung in dem Boden und/oder Deckel des Verteilerkopfes einschiebbar und aus diesem heraus bewegbar und zwar derart, dass die Seitenenden des Absperrschiebers in seiner Absperrstellung beabstandet zu den Eintrittsöffnungen der Verteilerleitungen und/oder zu den Seitenwandungen des Verteilerraumes angeordnet sind. Die schlitzförmige Aussparung und der hierin verschiebbare Absperrschieber weisen eine korrespondierende Form auf. Hierbei weist die schlitzförmigen Aussparung und der Absperrschieber einen geschwungenen, kreisförmigen und/oder aus kreissegmentartigen Teilstücken zusammengesetzten Verlauf auf.

Der in die vorerwähnte schlitzförmige Aussparung einschiebbare Absperrschieber besteht aus einem harten und formbeständigen Material und weist eine dem Verlauf der Aussparung entsprechende Form auf. Diese Form wird dem Absperrschieber entweder durch einen Prägevorgang oder eine andere geeignete Herstellungsweise gegeben.

Hierdurch ist eine aufwändige und teure Herstellungsweise für die Formgebung des Absperrschiebers erforderlich.

Der Erfindung liegt die Aufgabe zugrunde, auf einfache Weise einen Absperrschieber, der in einfacher Weise ohne aufwändige Formgebungswerkzeuge in einen kurvenförmig verlaufenden Aussparungsschlitz einschiebbar und in diesem verschiebbar ist, zu schaffen.

Diese Aufgabe wird erfindungsgemäß dadurch gelöst, dass der Absperrschieber aus einem elastisch verformbaren Material besteht und durch Einschieben in die schlitzförmige Aussparung die Form und/oder den Verlauf der schlitzförmigen Aussparung erhält.

Infolge dieser Maßnahme lässt sich der erfindungsgemäße Absperrschieber einfach in gewünschter und elastischer Weise verformen und in die Aussparung einschieben und nimmt, in dem er in die Aussparung eingeschoben wird, zwangsläufig den kurvenförmigen Verlauf der Aussparung aufgrund seiner Elastizität an.

Somit wird hierdurch der an sich ebene Schieber zu einem dem kurvenförmigen Verlauf der Aussparung entsprechende Form aufweisenden Schieber. Aufgrund seiner erfindungsgemäßen Ausgestaltung passt sich der Schieber in optimierter Weise dem kurvenförmigen Aussparungsverlauf entsprechend an. Ein Vorformen des Schiebers ist aufgrund seiner Eigenelastizität nicht nötig.

In vorteilhafter Weise lässt sich ein erfindungsgemäßer Absperrschieber dadurch verwirklichen, dass das elastische Material des Absperrschiebers Polyamid ist.

Auch lässt sich ein erfindungsgemäßer Absperrschieber dadurch schaffen, dass das elastische Material des Absperrschiebers dünnwandiges Federblech ist.

Um einerseits eine ausreichende Steifigkeit des Absperrschiebers bei Erhaltung einer ausreichenden Elastizität des Absperrschiebers zu erhalten, ist vorgesehen, dass die Materialdicke des Absperrschiebers zwischen 1 und 3mm, vorzugsweise etwa 1,5mm beträgt.

Weitere Einzelheiten der Erfindung sind der Beispielsbeschreibung und den Zeichnungen zu entnehmen. Hierbei zeigen
- Fig. 1: den Verteilerkopf eines pneumatischen Verteil- und Dosiersystems mit im Halbschnitt dargestellten Verteilerkopfdeckel, wobei der Absperrschieber in seiner Absperrposition sich befindet, in perspektivischer Darstellung,
- Fig. 2: den Verteilerkopf in der Darstellungsweise nach Fig. 1, wobei der Absperrschieber sich in halb eingeschobener Stellung in den Verteilerraum des Verteilerkopfes befindet,
- Fig. 3: den Verteilerkopf in der Darstellung nach Fig. 1, wobei der Absperrschieber sich in der eingezogenen Position befindet,
- Fig. 4: den Verteilerkopf in der Draufsicht mit abgenommenem Verteilerkopfdeckel,
- Fig. 5: Darstellung der Form des Absperrschiebers, wenn er sich in der Aussparung befindet, in perspektivscher Darstellung und
- Fig.6: Darstellung der Form des Absperrschiebers, wenn er sich nicht in der Aussparung befindet, als ebenes plattenförmiges Element in perspektivscher Darstellung.

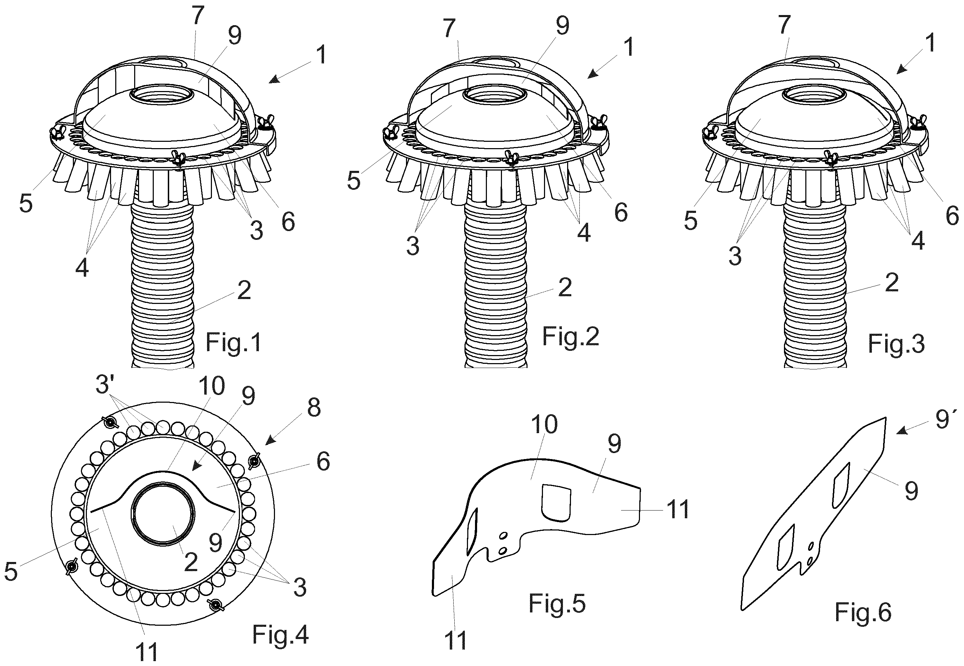

Der in den Fig. 1 bis 4 dargestellte Verteilerkopf 1 ist Bestandteil eines pneumatischen Dosier- und Verteilsystems einer pneumatischen arbeitenden landwirtschaftlichen Verteilmaschine.

Über das Zuführrohr 2, welches mit einem pneumatischen Förderluftstrom, der von einem motorisch angetriebenen Gebläse erzeugt wird, beaufschlagt ist, wird dem am Ende des Zuführrohres 2 angeordneten Verteilerkopf 1 das auszubringende Material, beispielsweise Saatgut oder Dünger in einstellbarer Weise zugeführt. Über den Verteilerkopf 1 wird das Material in bekannter Weise auf die zu einzelnen Ausbringorganen führende Eintrittsöffnungen 3 aufweisenden Verteilerleitungen 4 aufgeteilt.

Der Verteilerraum 5 des Verteilerkopfes 1 ist ringförmig ausgestaltet. Von dem Verteilerkopf 1 aus führen, wie bereits erwähnt, mehrere Zuführleitungen 4, die Eintrittsöffnungen 3 aufweisen, weg.

Der Verteilerkopf 1 weist den Boden 6 und den Deckel 7 auf. In dem Boden 6 ist die aus kreisförmigen Teilkreissegmenten zusammen gesetzte und geschwungen verlaufende Aussparung 8 angeordnet. In diese Aussparung 8 ist der Absperrschieber 9 eingeschoben, wie weiter unten noch erläutert wird.

Dem Verteilerkopf 1 ist der Absperrschieber 9, der von unten in den Verteilerraum 5 des Verteilerkopfes 1 einschiebbar ist, zugeordnet. Dieser Absperrschieber 6 ist in den Verteilerraum 5 zum Absperren einzuschieben, so dass also einige Eintrittsöffnungen 3 der Verteilerleitungen 4 absperrbar sind, und aus dem Verteilerraum 5 herausbewegbar, so dass das zugeführte Material auf alle Eintrittsöffnungen 3 der Verteilerleitungen 4 in gleichmäßiger Weise aufgeteilt wird.

Der Absperrschieber 9 und die Aussparung 8 weisen, wie in Fig. 4 und 5 erkennbar ist, einen teilweise kreisförmig und aus kreissegmentartigen Teilstücken zusammengesetzten Verlauf auf. Hierbei besteht der Absperrschieber 9 aus teilweise entgegengesetzt zueinander gekrümmt verlaufenden Bereichen 10 und 11 auf. Die einzelnen Bereiche sind durchgehend miteinander verbunden.

Der Absperrschieber 9 besteht aus einem elastisch verformbaren Material und ist zunächst eine ebene Platte 9', wie Fig. 6 zeigt.

Der zunächst als ebene Platte 9' hergestellte Absperrschieber 9 wird vor dem Einschieben in die Aussparung 8 in den Boden 6 des Verteilerkopfes 1 händisch leicht vorgebogen und dann in die Aussparung 8 eingesetzt. Durch Einschieben in die schlitzförmige Aussparung 8 erhält der Absperrschieber 9 die in Fig. 5 dargestellte Form und/oder Verlauf entsprechend der schlitzförmigen Aussparung 8, wie auch in den Fig. 1 bis 4 zu sehen ist. Somit passt sich der Schieber 9 dem Vorlauf der Aussparung aufgrund seiner Elastizität an.

Im Ausführungsbeispiel ist das elastische Material des Absperrschiebers 9 Polyamid.

Die Materialdicke des Absperrschiebers 9 zwischen 1 und 3mm, vorzugsweise etwa 1,5mm beträgt.

Es ist auch möglich, dass das elastische Material des Absperrschiebers dünnwandiges Federblech ist.

## Patentansprüche

1. Verteiler für eine pneumatische Verteilmaschine für Saatgut, Dünger und dergleichen mit folgenden Merkmalen:
1.1. einen ringförmigen Verteilerraum (5) definierenden Verteilerkopf (1),
1.2. in den Verteilerkopf (1) mündet mindestens eine Zuführleitung (2)
1.3. an den Verteilerkopf (1) schließen, mit Abstand zu der Zuführleitung (2), Verteilerleitungen (4) an,
1.4. zumindest einen Absperrschieber (9),
1.5. der Absperrschieber (9) ist in den ringförmigen Verteilerraum (5) durch eine schlitzförmige Aussparung (8) in dem Boden (6) und/oder Deckel (7) des Verteilerkopfes (1) einschiebbar und aus diesem heraus bewegbar,
1.6. wobei die schlitzförmige Aussparung (8) und der hierin verschiebbare Absperrschieber (9) eine korrespondierende Form aufweisen,
1.7. wobei die schlitzförmige Aussparung (8) und der Absperrschieber (9) einen geschwungenen, kreisförmigen und/oder aus kreissegmentartigen Teilstücken (10,11) zusammengesetzten Verlauf aufweisen,
**dadurch gekennzeichnet,**
**dass** der Absperrschieber (9) aus einem elastisch verformbaren Material besteht und durch Einschieben in die schlitzförmige Aussparung (8) die Form und/oder den Verlauf der schlitzförmigen Aussparung (8) erhält.

2. Verteiler nach Anspruch 1, **dadurch gekennzeichnet, dass** das elastische Material des Absperrschiebers (9) Polyamid ist.

3. Verteiler nach Anspruch 1, **dadurch gekennzeichnet, dass** das elastische Material des Absperrschiebers dünnwandiges Federblech ist.

4. Verteiler nach Anspruch 1, **dadurch gekennzeichnet, dass** die Materialdicke des Absperrschiebers (9) zwischen 1 und 3 mm, vorzugsweise etwa 1,5 mm beträgt.

## Claims

1. Distributor for a pneumatic distribution machine for seeds, fertilizer and the like, having the following features:
1.1. a distributor head (1) defining an annular distributor space (5),
1.2. at least one feed line (2) leads into the distributor head (1),
1.3. distributor lines (4) are connected to the distributor head (1), at a distance from the feed line (2),
1.4. at least one shut-off slide (9),
1.5. the shut-off slide (9) is able to be pushed into and moved out of the annular distributor space (5) through a slot-like cutout (8) in the base (6) and/or cover (7) of the distributor head (1),
1.6 wherein the slot-like cutout (8) and the shut-off slide (9) that is displaceable therein have corresponding shapes,
1.7 wherein the slot-like cutout (8) and the shut-off slide (9) have a profile that is curved, circular and/or made up of circular-segment-like sections (10, 11),
**characterized**
**in that** the shut-off slide (9) consists of an elastically deformable material and obtains the shape and/or the profile of the slot-like cutout (8) by being pushed into the slot-like cutout (8).

2. Distributor according to Claim 1, **characterized in that** the elastic material of the shut-off slide (9) is polyamide.

3. Distributor according to Claim 1, **characterized in that** the elastic material of the shut-off slide is thin-walled spring sheet metal.

4. Distributor according to Claim 1, **characterized in that** the material thickness of the shut-off slide (9) is between 1 and 3 mm, preferably about 1.5 mm.

## Revendications

1. Distributeur pour une machine de distribution pneumatique de semences, d'engrais et similaires, comprenant les caractéristiques suivantes :
1.1. une tête de distribution (1) définissant un espace de distribution annulaire (5),
1.2. au moins une conduite d'alimentation (2) débouche dans la tête de distribution (1), 1.3. à la tête de distribution (1) se raccordent, à distance de la conduite d'alimentation (2), des conduites de distribution (4),
1.4. au moins une vanne d'arrêt (9),
1.5. la vanne d'arrêt (9) peut être introduite dans l'espace de distribution annulaire (5) et ressortie de celui-ci à travers un évidement en forme de fente (8) dans le fond (6) et/ou le couvercle (7) de la tête de distribution (1),
1.6 l'évidement en forme de fente (8) et la vanne d'arrêt (9) déplaçable dans celui-ci présentant une forme correspondante,
1.7 l'évidement en forme de fente (8) et la vanne d'arrêt (9) présentant une allure incurvée, circulaire, et/ou constituée de pièces partielles de type segments circulaires (10, 11),
**caractérisé en ce que**
la vanne d'arrêt (9) se compose d'un matériau déformable élastiquement et acquiert la forme et/ou l'allure de l'évidement en forme de fente (8) par insertion dans l'évidement en forme de fente (8).

2. Distributeur selon la revendication 1, **caractérisé en ce que** le matériau élastique de la vanne d'arrêt (9) est du polyamide.

3. Distributeur selon la revendication 1, **caractérisé en ce que** le matériau élastique de la vanne d'arrêt est une tôle élastique à parois minces.

4. Distributeur selon la revendication 1, **caractérisé en ce que** l'épaisseur de matériau de la vanne d'arrêt (9) est comprise entre 1 et 3 mm, de préférence vaut environ 1,5 mm.
